# EUROPÄISCHE PATENTSCHRIFT

(11) **EP 0 922 203 B1**
(45) Veröffentlichungstag und Bekanntmachung des Hinweises auf die Patenterteilung: **31.05.2000**
(21) Anmeldenummer: 97903287.7
(22) Anmeldetag: 14.02.1997
(51) Int. Cl.: G01F 1/684, G01F 1/708, G01P 13/02

(54) **STRÖMUNGSSENSORKOMPONENTE**
FLOW SENSOR COMPONENT
COMPOSANT POUR CAPTEURS DE MESURE D'ECOULEMENT

(43) Veröffentlichungstag der Anmeldung: 16.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: KERSJES, Ralf, D-47058 Duisburg (DE); MOKWA, Wilfried, D-47800 Krefeld (DE); ZIMMER, Günter, D-47269 Duisburg (DE); VOGT, Holger, D-45481 Mülheim (DE)
(74) Vertreter: Schoppe, Fritz, Dipl.-Ing.
(86) Internationale Anmeldenummer: EP9700708
(87) Internationale Veröffentlichungsnummer: WO9836247

(56) Entgegenhaltungen:
- EP-A- 0 490 764
- DE-A- 4 042 334
- US-A- 4 680 963
- KERSJES R ET AL: "A FAST LIQUID FLOW SENSOR WITH THERMAL ISOLATION BY OXIDE-FILLED TRENCHES" SENSORS AND ACTUATORS A, Bd. A47, Nr. 1/03, März 1995, LAUSANNE,CH, Seiten 373-379, XP000516289 in der Anmeldung erwähnt
- J.WERNO ET AL.: "Reduction of Heat Loss of Silicon Membranes by the Use of Trench-etching Techniques" SENSORS AND ACTUATORS A., Bd. 41-42, 15.April 1994, LAUSANNE CH, Seiten 578-581, XP000044998
- PATENT ABSTRACTS OF JAPAN vol. 018, no. 384 (P-1772), 19.Juli 1994 & JP 06 109507 A (NIPPONDENSO CO LTD), 19.April 1994,

## Beschreibung

Die vorliegende Erfindung bezieht sich auf thermische Halbleiter-Strömungssensoren mit Richtungserkennung für Flüssigkeiten und Gase und insbesondere auf eine Silizium-Strömungssensorkomponente für derartige Strömungssensoren.

Sensoren auf Siliziumtechnologiebasis weisen für viele Meßanwendungen vielversprechende Eigenschaften auf. Beispielsweise besitzen dieselben kleine Abmessungen, können kostengünstig in Massenproduktion hergestellt werden und ermöglichen die monolithische Integration einer Ausleseelektronik. Silizium-Strömungssensoren bieten ferner den Vorteil geringer Ansprechzeiten und eines geringen Leistungsverbrauchs. Jedoch ist die Integration der Elektronik bei der Herstellung der Siliziumsensoren nur möglich, wenn Prozeßschritte, die kompatibel zu den Herstellungsverfahren der Mikroelektronik sind, bei dieser Integration der Elektronik verwendet werden.

Es sind Strömungssensoren auf Siliziumtechnologiebasis bekannt, die auf der Grundlage einer Druckdifferenzmessung arbeiten. Derartige Strömungssensoren sind beispielsweise bei S.T. Cho, K. Najafi, C.E. Lowman and K.D. Wise: An ultrasensitive silicon pressure-based microflow sensor, IEEE Transaction on Electron Devices, Bd. 39, Nr. 4 (1992) 825 - 835 beschrieben.

J. Braneberg, O.J. Jensen, N.G. Laursen, O. Leistiko and H. Soeberg: A micromachined flow sensor for measuring small liquid flows, Proc. 6th Int. Conf. Solid-State Sensors and Actuators (Transducers 1991), San Fransisco, CA, USA, 24. - 27. Juni 1991, S.41-44, beschreiben Strömungssensoren, die auf dem Prinzip der Laufzeitmessung bei thermischer Markierung arbeiten. Ferner sind Strömungssensoren bekannt, die auf den thermischen Grundsätzen entsprechend dem Heißfilmanemometer-Prinzip arbeiten. Sensoren der oben beschriebenen Art wurden bisher zum weitaus größten Teil zur Strömungsmessung von Gasen eingesetzt.

Im folgenden werden bekannte, dem Heißfilm- oder Hitzdrahtanemometer-Verfahren ähnliche Lösungsansätze beschrieben. Das Heißfilmanemometer-Prinzip beruht auf der Abkühlung beheizter Strukturen durch mit dieser Struktur in Kontakt stehende strömende Medien. Die Abkühlung der beheizten Strukturen hängt dabei von der Strömungsgeschwindigkeit des Mediums ab.

Erste Siliziumströmungssensoren wurden bereits zwischen 1970 und 1980 beschrieben. R.W.M. van Riet and J.H. Huijsing: Integrated direction-sensitive flowmeter; Electronic Letters, 1976, Bd. 12, Nr. 4, S. 647-648, beschreiben einen Strömungssensor, bei dem strömungsmäßig vor und hinter einem Transistor, der als Heizelement dient, zwei Transistoren als Temperatursensoren auf einem Siliziumsubstrat angeordnet sind. Bei diesem Strömungssensor ist die Signaldifferenz zwischen den beiden Temperatursensoren, die strömungsmäßig vor und hinter dem Heizelement angeordnet sind, ein Maß für die Strömungsgeschwindigkeit eines an dem Strömungssensor vorbeiströmenden Mediums.

Ein ähnlicher Aufbau unter Verwendung von Wheatstone-Brücken aus ionenimplantierten Widerständen ist bei A.F.P. van Putten and S. Middelhoek: Integrated silicon anemometer; Electronic Letters, Bd. 10 (1974), S. 425-426, beschrieben. Bezüglich weiterführender Untersuchungen derartiger Sensoren sei auch auf A.F.P. van Putten: An integrated silicon double bridge anemometer. Sensors and Actuators, Bd. 4 (1983), S. 387-396; und J.I. Huijsing, J.P. Schuddemat and W. Verhoef: Monolithic integrated direction sensitive flow sensor; IEEE Trans. Electron Devices, Bd. ED-29 (1982) Nr. 1, S. 133-136, verwiesen.

Bei derartigen bekannten Strömungssensoren war die Empfindlichkeit klein, da zwischen dem Heizelement und den Temperatursensoren über den Siliziumchip, der eine gute Wärmeleitfähigkeit besitzt, ein thermisch guter Kontakt existiert. Die Empfindlichkeit hängt dabei ferner stark von der Aufbautechnik ab. Folglich wurden Strukturen entwickelt, die die beiden Temperatursensoren und das Heizelement thermisch besser voneinander isolieren. Dadurch kann die Erfassung des strömungsabhängigen Anteils der Wärme, der in das Medium gelangt, verbessert werden.

Bei R.G. Johnson and R.E. Higashi: A highly sensitive silicon chip microtransducer for air flow and differential pressure sensing applications; Sensors and Actuators, Bd. 11 (1987), S. 63-72, ist ein Strömungssensor mit einer vorderseitig anisotrop unterätzten, freistehenden Siliziumnitridbrücke offenbart. Auf dieser Siliziumnitridbrücke sind Heizelemente und Temperatursensoren angeordnet, die auf Metallwiderständen basieren. Nachteilig bei einer derartigen unterätzten Struktur ist jedoch die Empfindlichkeit derselben gegenüber beispielsweise Staub- oder Öl-Partikeln.

M. Stenberg, G. Stemme and G. Kittisland: A silicon sensor for measurement of liquid flow and thickness of fouling biofilms, Sensors and Actuators, 13 (1988), 203-221, offenbaren einen Lösungsansatz, bei dem die thermische Isolation zwischen Heizelementen und Temperaturerfassungselementen durch ein Polyimid bewerkstelligt ist. Dabei ist aus einem Chip rückseitig eine dünne Zunge herausgeätzt, deren Spitze durch einen vorderseitigen Ätzprozeß bis auf die Leiterbahnen und eine auf der Rückseite befindliche Oxidschicht von der Zunge getrennt wird. Die somit entstandene v-förmige Grube wird zur Stabilisierung mit einem Polyimid aufgefüllt. Auf der Spitze befinden sich ein Heizelement und eine Diode zur Temperaturmessung. Nachteilig an einem solchen System ist die Abhängigkeit der Wärmeleitfähigkeit von äußeren Einflüssen, die auf das Polyimid einwirken, beispielsweise der Feuchtigkeit.

Ein Strömungssensor mit einer rückseitig geätzten Membran aus einem vollständig oxidiertem, porösen Silizium unter Verwendung von Platinwiderständen ist bei 0. Tabata: Fast response silicon flow sensor with an on-chip fluid temperature sensing element; IEEE Trans. Electron. Devices, Bd. ED-33 (1986) S. 297-302, beschrieben. Die in dieser Schrift beschriebene Struktur besitzt eine glatte Fläche und bietet daher keinen direkten Halt für Partikel oder einen Staudruck, erlaubt allerdings keine Integration von mikroelektronischen Bauelementen in die Membran.

Es sind ferner Strömungssensoren bekannt, die mit Hilfe von zwei freistehenden Polysiliziumbrücken auf einer Chipoberfläche aufgebaut sind. Als Opferschicht unterhalb der Polysiliziumbrücke wird dabei beispielsweise Phosphorsilikatglas verwendet. Im mittleren Bereich der Polysiliziumbrücke befindet sich ein niedrig dotiertes Gebiet, das als strömungsempfindlicher beheizter Widerstand dient, wobei der Rest der Brücke hochdotiert ist und als elektrische Leitung wirksam ist. Ein Strömungssensor, bestehend aus einer Siliziummembran, die zur thermischen Isolation freihängend an vier Armen gehalten ist, wird von B. W. van Oudheusden, A.W. van Herwaarden: High-sensitivity 2-D flow sensor with an etched thermal isolation structure; Sensors and Actuators, A21-A23 (1990) 425-430, offenbart. Dabei erfolgt die Temperaturdifferenzmessung über eine Thermosäule.

E. Yoon, K.D. Wise: An integrated mass flow sensor with on-chip CMOS interface circuits; IEEE Transactions on Electron. Devices, Bd. 39, Nr. 6 (1992) 1376-1386; R.G. Johnson and R.E. Higashi: A highly sensitive silicon chip microtransducer for air flow and differential pressure sensing applications; Sensors and Actuators, Bd. 11 (1987), S. 63-72; sowie T.R. Ohnstein, R.G. Johnson, R.E. Higashi, D.W. Burns, J.O. Holmen, E.A. Satren, G.M. Johnson, R. Bicking and S.D. Johnson: Environmentally rugged, wide dynamic range microstructure airflow sensor; IEEE Solid-State Sensor and Actuator Workshop Tech. Digest (1990), Hilton Head Island, South Carolina, beschreiben mit der entsprechenden Elektronik versehene monolithisch integrierte Strömungssensoren für Gase. Aus Robustheitsgründen wurde auch bei diesen Strömungssensoren als strömungsempfindliches Element eine rückseitengeätzte Membran aus Oxid verwendet. Die Metallisierung des Chips besteht aus Gold und Chrom. Ebenso sind die temperaturempfindlichen Elemente aus Au-Cr-Dünnfilmwiderständen gebildet.

In der Schrift O. Tabata: Fast response silicon flow sensor with an on-chip fluid temperature sensing element; IEEE Trans. Electron. Devices, Bd. 33 (1986) S. 297-302, ist in Abweichung zu den oben beschriebenen Sensoren ein Strömungssensor erläutert, bei dem die Oxid-Membran nicht durch Oxidation aus porösem Silizium hergestellt ist, sondern durch einen LPCVD-Nitrid/Oxid-Schichtstapel (LPCVD = Low Pressure Chemical Vapour Deposition). Bei diesem Sensor ist zusätzlich zu dem Strömungssensor noch ein Gassensor und ein Drucksensor integriert.

D. Moser, R. Lengenhager und H. Baltes: Silicon gas flow sensors using industrial CMOS and bipolar IC technology; Sensors and Actuators, A27 (1991), S. 577-581, offenbaren Gasstromsensoren mit integrierter Elektronik, die zum einen auf CMOS-Prozessen und zum anderen auf Bipolar-Prozessen basieren. Bei dem CMOS-kompatiblen Strömungssensor ist eine Aluminium/Polysilizium-Thermosäule auf einer Oxid-Zunge angeordnet, die bei einem vorderseitigen Ätzen einer v-förmigen Grube belassen wurde. Bei den unter Verwendung von Bipolar-Prozessen hergestellten Sensoren ist die Zunge aus einem n-dotierten, epitaktischem Silizium geätzt, wobei die Thermosäule aus Aluminium und p-dotiertem Epi-Silizium besteht. Die DE 4338891 beschreibt Strömungssensoren unter Verwendung von zwei Siliziummembranen.

Erst in neuerer Zeit finden sich Hinweise zur Anwendung von Siliziumströmungssensoren in Flüssigkeit. Beispielsweise sind bei R. Kersjes, J. Eichholz, A. Langerbein, Y. Manoli and W. Mokwa: An integrated sensor for invasive bloodvelocity measurement, Sensors and Actuators A, 37-38 (1993) 674-678; R. Kersjes, W. Mokwa: A fast liquid flow sensor with thermal isolation by oxide filled trenches, Book of Abstracts, Eurosensors VIII Conference, Toulouse, France, 25. - 28. Sept. 1994, Strömungssensoren mit Einzelmembranen ohne die Möglichkeit einer Richtungserkennung beschrieben.

Bei A.J. van der Wiel, A.C. Hoogerwerf and N.F. de Rooij: A calorimetric mas- flow sensor for hostile environments, Proc. 7th International Conference on solid State Sensors and Actuators, Yokohama, Japan, Juni 7-10, 1993; A.J. van der Wiel, C. Linder und N.F. de Rooij: A liquid flow sensor based on the hot-wire principle; Sensors and Actuators, Proc. Eurosensors 1992, San Sebastian, Spanien; und T.S.J. Lammerink, N.R. Tas, M. Elwenspoek and J.H.J. Fluitman: Microliquid flow sensor, Sensors and Actuators A, 37-38 (1993), 45-50, sind Strömungssensoren beschrieben, die eine Siliziummembran beheizen. Aufgrund der Strömung des Mediums in eine bestimmte Richtung ergibt sich ein asymmetrischer Temperaturverlauf in der einkristallinen Siliziummembran. Die Messung dieser Temperaturasymmetrie mit Hilfe zweier Temperatursensoren liefert dann sowohl ein strömungsabhängiges Maß als auch strömungsrichtungsabhängiges Maß. Jedoch weisen diese Sensoren eine geringe Empfindlichkeit auf.

Eine weitere Strömungssensorkomponente ist aus EP-A-490 764 bekannt.

Ausgehend von dem genannten Stand der Technik liegt der vorliegenden Erfindung die Aufgabe zugrunde, eine robuste Strömungssensorkomponente mit einer guten thermischen Isolation zwischen Heizbereichen und Temperaturerfassungsbereichen zu schaffen.

Diese Aufgabe wird durch eine Strömungssensorkomponente gemäß Anspruch 1 gelöst.

Die vorliegende Erfindung schafft eine Strömungssensorkomponente, die aus einer Membran aus einkristallinem Silizium besteht, wobei in der Membran mit einem thermisch isolierendem Material gefüllte Gräben angeordnet sind, die die Membran von einer ersten Hauptoberfläche derselben zu einer zweiten Hauptoberfläche derselben durchdringen. Durch die Gräben wird eine Mehrzahl von mit Heizelementen und/oder Temperaturerfassungselementen versehenen, thermisch voneinander isolierten Bereichen der Membran festgelegt.

Bei bevorzugten Ausführungsbeispielen der vorliegenden Erfindung handelt es sich um thermische Siliziumströmungssensoren, bei denen rückseitengeätzte Membranen mit vorzugsweise mit einem dielektrischen Material gefüllten Gräben zur thermischen Isolation unterschiedlicher Bereiche der Membranen versehen sind. Diese Membrane bestehen folglich aus einer Kombination von einkristallinem Silizium und zusätzlichen Gräben, die vorzugsweise mit einem dielektrischen Material aufgefüllt sind, beispielsweise Siliziumoxid oder Siliziumnitrid. Die aufgefüllten Gräben können auch als Trenches bezeichnet werden. Mögliche Herstellungsverfahren zum Bilden derartiger Gräben in Siliziummembranen sind beispielsweise in der PCT-Anmeldung mit dem Aktenzeichen PCT/DE91/00162 der Anmelderin der vorliegenden Anmeldung offenbart.

Die vorliegende Erfindung kombiniert die Vorteile der Verwendung von Siliziummembranen und von Membranen aus dielektrischen Materialien, beispielsweise Siliziumnitrid und Siliziumoxid, mit der Möglichkeit der Strömungsrichtungsmessung. Die Siliziummembran besitzt den Vorteil, daß sie robust aufgebaut sein kann und ferner die Integration von temperaturempfindlichen elektronischen Bauelementen in der Membran ermöglicht. Die Verwendung der Gräben, Trenches, ermöglicht daneben eine Steigerung der Empfindlichkeit durch die bessere thermische Isolation beispielsweise von Heizelementen und thermischen Erfassungselementen. Bei Anwendung der erfindungsgemäßen Strömungssensorkomponente kann zur Vermeidung von Kurzschlüssen eine dielektrische Passivierung der Heizelemente, der Temperaturerfassungselemente sowie weiterer elektronischer Komponenten verwendet werden.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Querschnittansicht eines Ausführungsbeispiels einer Strömungssensorkomponente gemäß der vorliegenden Erfindung;
- Fig. 2: eine schematische Teildraufsicht der in Fig. 1 gezeigten Strömungssensorkomponente;
- Fig. 3 und 4: schematische Teildraufsichten von Ausführungsbeispielen weiterer Strömungssensorkomponenten gemäß der vorliegenden Erfindung; und
- Fig. 5: eine schematische Darstellung eines vorteilhaften Temperaturerfassungselements.

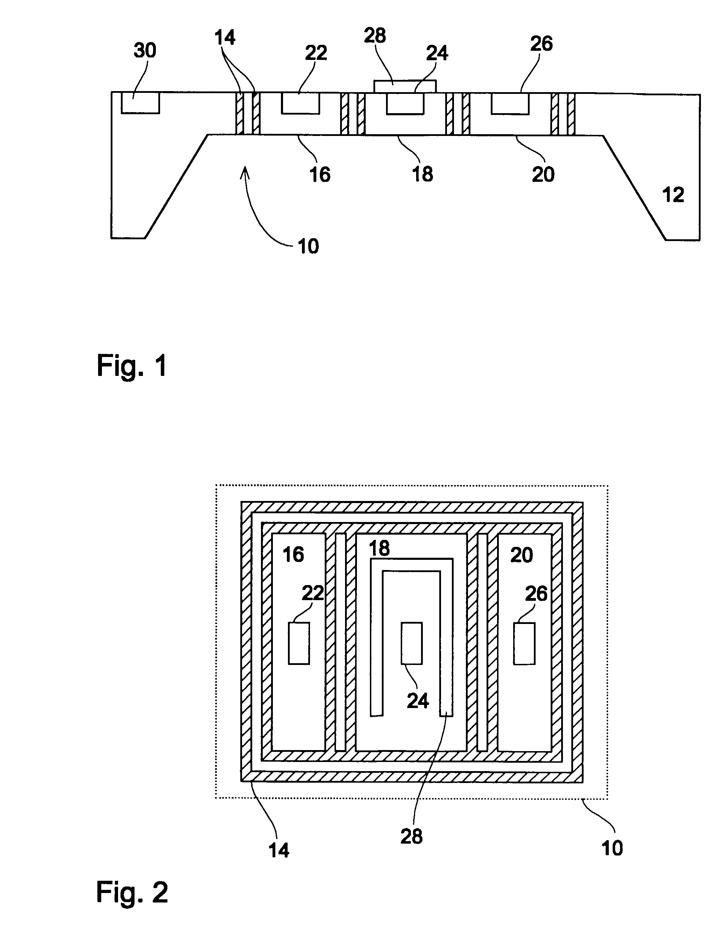

In den Fig. 1 und 2 ist ein erstes Ausführungsbeispiel einer Strömungssensorkomponente gemäß der vorliegenden Erfindung dargestellt. Eine Siliziummembran ist beispielsweise mittels eines Rückseitenätzens in einem Siliziumchip 12 gebildet. In der Siliziummembran 10 sind bei dem dargestellten Ausführungsbeispiel Gräben 14 angeordnet, die in der Siliziummembran 10 drei thermisch voneinander isolierte Bereiche 16, 18 und 20 festlegen. Die Gräben erstrecken sich von einer Hauptoberfläche vollständig durch die Membran 10 zu einer zweiten Hauptoberfläche derselben. Diese Gräben sind vorzugsweise mit einem dielektrischen Material, bei dem bevorzugten Ausführungsbeispiel Siliziumoxid, gefüllt. Derartige aufgefüllte Gräben werden in der Technik auch als Trenches bezeichnet.

Bei dem in den Fig. 1 und 2 dargestellten Ausführungsbeispiel ist in jedem der thermisch voneinander isolierten Bereiche ein Temperaturerfassungselement, d.h. ein Temperatursensor, 22, 24, 26 angeordnet. Ferner ist in dem mittleren der drei Bereiche ein Heizelement 28 angeordnet. Ein weiterer Temperatursensor 30 ist außerhalb der thermisch voneinander isolierten Bereiche angeordnet.

Die Funktionsweise eines Strömungssensors auf der Basis von Temperatursensoren und Heizelementen ist Fachleuten bekannt und wird daher hierin nicht näher erläutert.

Der Wärmestrom auf der Siliziummembran 10 wird durch die Trenches 14 zwischen den voneinander thermisch isolierten Bereichen eingestellt. Als Heizelement kann beispielsweise eine Polysiliziumwiderstand, ein diffundierter Widerstand oder ein Transistor verwendet werden. Für Fachleute ist es offensichtlich, daß das Heizelement nicht die in Fig. 2 dargestellte U-Form aufweisen muß, sondern direkt über dem Temperatursensor 24, der zur Erfassung der Temperatur des Heizelements dient, angeordnet sein kann.

Die erfindungsgemäße Strömungssensorkomponente ermöglicht eine zusätzliche Strömungsrichtungserkennung. Durch die thermische Trennung der beheizten und unbeheizten Bereiche durch die Trenches ergeben sich je nach Anströmungsrichtung unterschiedliche Temperaturprofile, die mit Hilfe der Temperatursensoren, bei dem in Fig. 1 dargestellten Ausführungsbeispiel die Temperatursensoren 22, 24, 26 und optional 30, auf einer Membran gemessen werden können. Diese Trennung der Bereiche, d. h. die thermische Isolierung derselben, die eine erhöhte Empfindlichkeit der Strömungssensorkomponente zur Folge hat, wird durch die Benutzung der aufgefüllten Gräben ermöglicht. Die Temperaturdifferenzen zwischen unterschiedlichen Temperatursensoren sind ein Maß für die Strömungsgeschwindigkeit und die Strömungsrichtung.

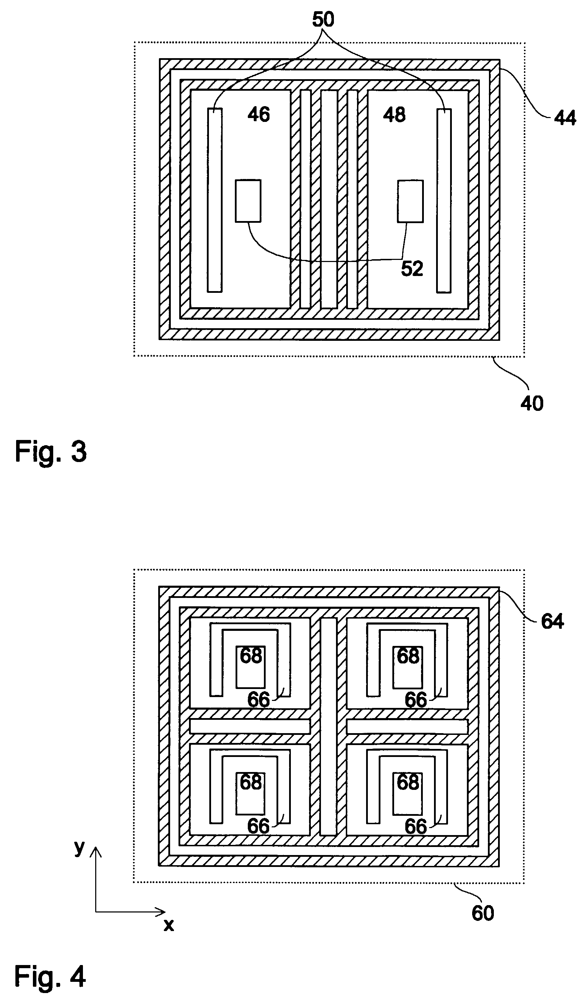

In Fig. 3 ist eine schematische Draufsicht eines Ausführungsbeispiels einer Strömungssensorkomponente gemäß der vorliegenden Erfindung dargestellt, die beispielsweise für ein Laufzeitverfahren zur Messung der Strömungsgeschwindigkeit eines an der Strömungssensorkomponente vorbeiströmenden Mediums verwendet werden kann. Bei diesem Ausführungsbeispiel sind in einem Siliziumsubstrat 40 durch Trenches 44 zwei voneinander thermisch isolierte Bereiche 46 und 48 festgelegt. In den thermisch isolierten Bereichen sind jeweils Heizelemente 50 und Temperatursensoren 52 angeordnet.

Wie bei dem in Fig. 2 dargestellten Ausführungsbeispiel ist jeder Bereich jeweils vollständig von den Trenches 44 umgeben. Die Außenumrandung der thermisch voneinander isolierten Bereiche ist wie bei dem in Fig. 2 dargestellten Ausführungsbeispiel durch einen Doppelgraben, der aus zwei parallel nebeneinander und beabstandet voneinander verlaufenden Gräben gebildet ist, festgelegt. Jedoch sind bei dem in Fig. 3 dargestellten Ausführungsbeispiel an der Grenzfläche zwischen den thermisch voneinander isolierten Bereichen vier parallel und beabstandet zueinander verlaufende Gräben dargestellt. Es ist offensichtlich, daß die thermische Isolation der einzelnen Bereiche um so größer ist, je mehr parallel nebeneinander und beabstandet zueinander verlaufende Gräben jeweils zur Erzeugung der Isolation verwendet sind. Aus Gründen der Klarheit sind in den Figuren jeweils nur zwei bzw. vier parallel zueinander verlaufende Gräben dargestellt, wobei jedoch in der Praxis eine größere Anzahl von parallel verlaufenden Gräben, beispielsweise vier, acht oder sechzehn, verwendet werden kann.

Bei Laufzeitverfahren zur Messung der Strömungsgeschwindigkeit eines an einem Strömungssensor vorbeiströmenden Mediums wird in einem mit Trenches thermisch isolierten Bereich der Membran ein Heizpuls durch das in diesem Bereich sitzende Heizelement abgegeben und über das Medium, beispielsweise eine Flüssigkeit, transportiert. Die in dem Medium transportierte Wärme kann an einer anderen Stelle der Membran mit Hilfe eines Temperaturfühlers gemessen werden. Die Zeit zwischen dem Heizpuls und der Detektion des Wärmepulses liefert ein Maß für die Strömungsgeschwindigkeit.

In Fig. 4 ist schematisch ein weiteres Ausführungsbeispiel einer Strömungssensorkomponente gemäß der vorliegenden Erfindung dargestellt. Bei diesem Ausführungsbeispiel sind in einem Substrat 60 vier durch Gräben 64 thermisch voneinander isolierte Bereiche festgelegt. In jedem Bereich ist ein Heizelement 66 und ein Temperatursensor 68 angeordnet. Durch den in Fig. 4 dargestellten Aufbau ist es möglich, nicht nur die Strömungsgeschwindigkeit und die Strömungsrichtung in der x-Richtung zu messen, sondern ferner in der y-Richtung.

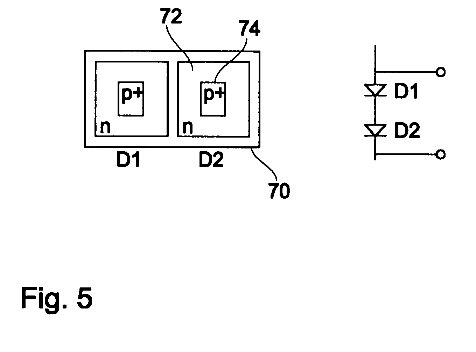

In Fig. 5 ist eine vorteilhafte Ausführungsform eines Temperaturerfassungselements dargestellt. Neben üblicherweise verwendeten diffundierten Widerständen oder Polysiliziumwiderständen zur Temperaturmessung können ferner in bekannter Weise Dioden verwendet werden. Die Dioden werden dabei beispielsweise in Vorwärtsrichtung betrieben. Gemäß der vorliegenden Erfindung werden Trenches 70 in einem CMOS-kompatiblen Prozeß für eine Serienschaltung von zumindest zwei Dioden, D1 und D2, verwendet, um die Temperaturempfindlichkeit gegenüber einer Diode zu erhöhen.

In Fig. 5 sind die unterschiedlich dotierten Bereiche, ein n-Bereich 72 und ein p⁺-Bereich 74, der Dioden D1 und D2 dargestellt. Diese beiden Dioden sind in geeigneter Weise, beispielsweise oberhalb des mittleren Trenches, elektrisch verbunden, um die rechts in Fig. 5 dargestellte Serienschaltung zweier Dioden festzulegen. Bei einer solchen Serienschaltung addieren sich die Temperaturempfindlichkeiten der einzelnen Dioden. Aufgrund parasitärer Effekte ist normalerweise eine derartige Nutzung der Serienschaltung von Dioden in einem CMOS-Prozeß nicht möglich. Diese Nutzung wird erst durch die Trenches 70, die die beiden Dioden jeweils umgeben, realisierbar.

Die vorliegende Erfindung schafft somit Strömungssensorkomponenten, die robust sind, da eine Siliziummembran dicker gewählt werden kann, als eine dielektrische Membran. Ferner ist bei der Strömungssensorkomponente gemäß der vorliegenden Erfindung die Empfindlichkeit der Strömungsrichtungserkennung durch das Vorsehen der Trenches gegenüber reinen Siliziummembranen erhöht. Durch die Verwendung der Siliziummembran ist es ferner möglich, temperaturempfindliche, mikroelektronische Bauelemente in die Membran zu integrieren. Vorteilig an der beschriebenen Diodenserienschaltung mit die einzelnen Dioden umgebenden Trenches ist die erhöhte Temperaturempfindlichkeit durch die Addition der Diodeneinzelspannungen sowie die damit erhöhte Strömungssensorempfindlichkeit.

## Patentansprüche

1. Strömungssensorkomponente bestehend aus einer Membran (10; 40; 60) aus einkristallinem Silizium, wobei in der Membran (10; 40; 60) mit einem thermisch isolierenden Material gefüllte Gräben (14; 44; 64) angeordnet sind, die die Membran (10; 40; 60) von einer ersten Hauptoberfläche derselben zu einer zweiten Hauptoberfläche derselben durchdringen, wobei durch die Gräben (14; 44; 64) zumindest ein mit zumindest einem Heizelement (28; 50; 66) versehener Heizbereich (18) und zumindest ein mit zumindest einem Temperaturerfassungselement (22, 24, 26; 52; 68) versehener Erfassungsbereich (16, 20) der Membran (10; 40; 60) festgelegt sind, wobei die Gräben den Heizbereich und den Erfassungsbereich thermisch voneinander isolieren und den Heizbereich und den Erfassungsbereich vollständig umgeben.

2. Strömungssensorkomponente gemäß Anspruch 1, bei der die Gräben (14; 44; 64) mit einem dielektrischen Material gefüllt sind.

3. Strömungssensorkomponente gemäß Anspruch 2, bei der die Gräben (14; 44; 64) mit Siliziumoxid oder Siliziumnitrid gefüllt sind.

4. Strömungssensorkomponente gemäß einem der Ansprüche 1 - 3, bei der jeder der Mehrzahl von thermisch voneinander isolierten Bereichen (16, 18, 20; 46, 48) jeweils von zumindest einem Graben (14; 44; 64) vollständig umgeben ist.

5. Strömungssensorkomponente gemäß einem der Ansprüche 1 - 4, bei der jeder Graben (14; 44; 64) in der Membran (10; 40; 60) zumindest einen neben und beabstandet von demselben verlaufenden weiteren Graben aufweist.

6. Strömungssensorkomponente gemäß einem der Ansprüche 1 - 5, bei der die thermisch isolierten Bereiche jeweils durch eine Vielzahl von parallel und voneinander beabstandet verlaufenden Gräben festgelegt sind.

7. Strömungssensorkomponente gemäß einem der Ansprüche 1 - 6, bei der die Temperaturerfassungselemente (22, 24, 26; 52; 68) durch diffundierte Widerstände oder Polysiliziumwiderstände gebildet sind.

8. Strömungssensorkomponente gemäß einem der Ansprüche 1 - 6, bei der die Temperaturerfassungselemente (22, 24, 26; 52; 68) durch eine Mehrzahl elektrisch seriell verschalteter Dioden (D1, D2) gebildet sind, wobei die einzelnen Dioden jeweils von einem die Membran (10; 40; 60) durchdringenden Graben (70) umgeben sind.

9. Strömungssensorkomponente gemäß einem der Ansprüche 1 - 8, bei der die Gräben (14) zwei Bereiche (16, 20) festlegen, in denen Temperaturerfassungselemente (22, 26) angeordnet sind, wobei zwischen den beiden Bereichen (16, 20) ein dritter Bereich (18) festgelegt ist, in dem ein Heizwiderstand (28) und ein Temeperaturerfassungselement (24) angeordnet ist.

10. Strömungssensorkomponente gemäß einem der Ansprüche 1 - 9, bei der die Membran (10; 40; 60) mittels eines Rückseitenätzens in einem Siliziumwafer (12) gebildet ist.

11. Strömungssensorkomponente gemäß einem der Ansprüche 1 - 10, bei der die Membran (10; 40; 60) zumindest im aktiven Bereich der Strömungssensorkomponente mit einer dielektrischen Passivierungsschicht überzogen ist.

12. Strömungssensorkomponente gemäß einem der Ansprüche 1 - 11, bei der die Heizelemente (28; 50; 66) durch Polysiliziumwiderstände, diffundierte Widerstände oder Transistoren gebildet sind.

## Claims

1. A flow sensor component consisting of a diaphragm (10; 40; 60) of monocrystalline silicon, the diaphragm (10; 40; 60) having arranged therein trenches (14; 44; 64) which are filled with a thermally insulating material and which penetrate the diaphragm (10; 40; 60) from a first main surface to a second main surface thereof, said trenches (14; 44; 64) defining at least one heating area (18) of the diaphragm (10; 40; 60) provided with at least one heating element (28; 50; 66) and at least one detection area (16, 20) of said diaphrgam (10; 40; 60) provided with at least one temperature detection element (22, 24, 26; 52; 68), said trenches thermally insulating said heating area and said detection area from one another and surrounding said heating area and said detection area completely.

2. A flow sensor component according to claim 1, wherein the trenches (14; 44; 64) are filled with a dielectric material.

3. A flow sensor component according to claim 2, wherein the trenches (14; 44; 64) are filled with silicon oxide or silicon nitride.

4. A flow sensor component according to one of the claims 1 to 3, wherein each of the plurality of thermally insulated areas (16, 18, 20; 46, 48) is fully surrounded by at least one trench (14; 44; 64).

5. A flow sensor component according to one of the claims 1 to 4, wherein each trench (14; 44; 64) in the diaphragm (10; 40; 60) is provided with at least one further trench extending in juxtaposed, spaced relationship therewith.

6. A flow sensor component according to one of the claims 1 to 5, wherein the respective thermally insulated areas are defined by a plurality of trenches extending in parallel, juxtaposed relatinship with one another.

7. A flow sensor component according to one of the claims 1 to 6, wherein the temperature detection elements (22, 24, 26; 52; 68) are formed by diffused resistors or polysilicon resistors.

8. A flow sensor component according to one of the claims 1 to 6, wherein the temperature detection elements (22, 24, 26; 52; 68) are defined by a plurality of diodes (D1, D2) which are electrically connected in series, the individual diodes being each surrounded by a trench (70) penetrating the diaphragm (10; 40; 60).

9. A flow sensor component according to one of the claims 1 to 8, wherein the trenches (14) define two areas (16, 20) in which temperature detection elements (22, 26) are arranged, said two areas (16, 20) having defined between them a third area (18) in which a heating resistor (28) and a temperature detection element (24) are arranged.

10. A flow sensor component according to one of the claims 1 to 9, wherein the diaphragm (10; 40; 60) is formed in a silicon wafer (12) by means of back etching.

11. A flow sensor component according to one of the claims 1 to 10, wherein the diaphragm (10; 40; 60) is coated with a dielectric passivation layer, at least in the active area of the flow sensor component.

12. A flow sensor component according to one of the claims 1 to 11, wherein the heating elements (28; 50; 66) are formed by polysilicon resistors, diffused resistors or transistors.

## Revendications

1. Composant pour capteur de mesure d'écoulement, consistant en une membrane (10 ; 40 ; 60) en silicium monocristallin, dans la membrane (10 ; 40 ; 60) étant disposées des tranchées (14 ; 44 ; 64), remplies d'un matériau thermo-isolant, traversant la membrane (10 ; 40 ; 60) d'une première surface principale de celle-ci à une seconde surface principale de celle-ci, par les tranchées (14 ; 44 ; 64) étant déterminées au moins une zone de chauffage (18), munie d'au moins un élément chauffant (28 ; 50 ; 66), et au moins une zone de détection (16 ; 20), munie d'au moins un élément de détection de température (22, 24, 26 ; 52 ; 68), de la membrane (10 ; 40 ; 60), les tranchées isolant thermiquement l'une de l'autre la zone de chauffage et la zone de détection et entourant entièrement la zone de chauffage et la zone de détection.

2. Composant pour capteur de mesure d'écoulement suivant la revendication 1, dans lequel les tranchées (14 ; 44 ; 64) sont remplies d'un matériau diélectrique.

3. Composant pour capteur de mesure d'écoulement suivant la revendication 2, dans lequel les tranchées (14 ; 44 ; 64) sont remplies d'oxyde de silicium ou de nitrure de silicium.

4. Composant pour capteur de mesure d'écoulement suivant l'une des revendications 1 à 3, dans lequel chacune de la pluralité de zones (16, 18, 20 ; 46 , 48) thermiquement isolées l'une de l'autre est entièrement entourée par au moins une tranchée (14 ; 44 ; 64).

5. Composant pour capteur de mesure d'écoulement suivant l'une des revendications 1 à 4, dans lequel chaque tranchée (14 ; 44 ; 64) dans la membrane (10 ; 40 ; 60) présente au moins une autre tranchée s'étendant adjacente à et à une distance de celle-ci.

6. Composant pour capteur de mesure d'écoulement suivant l'une des revendications 1 à 5, dans lequel chacune des zones thermiquement isolées est déterminée par une pluralité de tranchées s'étendant parallèles entre elles et à une distance l'une de l'autre.

7. Composant pour capteur de mesure d'écoulement suivant l'une des revendications 1 à 6, dans lequel les éléments de détection de température (22, 24, 26 ; 52 ; 68) sont constitués de résistances diffusées ou de résistances en polysilicium.

8. Composant pour capteur de mesure d'écoulement suivant l'une des revendications 1 à 6, dans lequel les éléments de détection de température (22, 24, 26 ; 52 ; 68) sont constitués d'une pluralité de diodes (D1, D2) électriquement reliées en série, les différentes diodes étant entourées, chacune, d'une tranchée (70) traversant la membrane (10 ; 40 ; 60).

9. Composant pour capteur de mesure d'écoulement suivant l'une des revendications 1 à 8, dans lequel les tranchées (14) déterminent deux zones (16, 20) dans lesquelles sont disposés des éléments de détection de température (22, 26), entre les deux zones (16, 20) étant déterminée une troisième zone (18) dans laquelle sont disposés une résistance chauffante (28) et un élément de détection de température (24).

10. Composant pour capteur de mesure d'écoulement suivant l'une des revendications 1 à 9, dans lequel la membrane (10 ; 40 ; 60) est formée par gravure du côté arrière dans une plaquette en silicium (12).

11. Composant pour capteur de mesure d'écoulement suivant l'une des revendications 1 à 10, dans lequel la membrane (10 ; 40 ; 60) est revêtue, au moins dans la zone active du composant pour capteur de mesure d'écoulement, d'une couche de passivation diélectrique.

12. Composant pour capteur de mesure d'écoulement suivant l'une des revendications 1 à 11, dans lequel les éléments chauffants (28 ; 50 ; 66) sont constitués de résistances en polysilicium, de résistances diffusées ou de transistors.
